(19) Europäisches Patentamt
European Patent Office
Office européen des brevets

(11) **EP 2 713 321 A2**

(12) **EUROPEAN PATENT APPLICATION**

(43) Date of publication:
02.04.2014 Bulletin 2014/14

(51) Int Cl.:
*G06Q 10/04* (2012.01)   *G06Q 50/06* (2012.01)

(21) Application number: 13186252.6

(22) Date of filing: 26.09.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.09.2012 US 201213629827

(71) Applicant: General Electric Company
Schenectady, New York 12345 (US)

(72) Inventors:
• Chen, Weiwei
Niskayuna, NY New York 12309 (US)
• Black, Jason Wayne
Dublin, OH Ohio 43016 (US)
• Tyagi, Rajesh
Niskayuna, NY New York 12309 (US)
• Wang, Xing
Niskayuna, NY New York 12309 (US)

(74) Representative: Cleary, Fidelma et al
GPO Europe
GE International Inc.
The Ark
201 Talgarth Road
Hammersmith
London W6 8BJ (GB)

(54) **Method and system for demand response management**

(57) A method for demand response management includes determining (62) a number of available demand response events, and determining (64) a number of opportunities available to issue the available demand response events. A priority for each demand response event is provided (66) and a threshold value for each demand response vent is determined (68). A highest priority demand response event among the available demand response events, whose threshold value is lower than an observed value of a selected demand response trigger, is selected (70). Control signals to utilize the selected demand response event for a current opportunity are transmitted (72) to customer sites.

*Fig. 3*

**Description**

BACKGROUND

Embodiments of the system relate generally to an electric power system and more specifically to management of a power demand during peak load conditions.

System reliability is important for transmission and distribution networks. Variability in load and non-linear energy demands are factors that undermine system reliability. While utilities maintain load forecasting models and techniques, the actual system load tends to be variable and subject to frequent fluctuation. There are currently limited techniques and tools that utilities can use to respond to variations in load or system contingencies. Methods to respond to transmission or distribution contingencies typically involve opening certain circuits, which leads to indiscriminant load shedding.

Demand response solutions are available that allow for the reduction of energy demand in response to peak loading conditions. The use of demand side resources to respond to contingencies on electric power systems is typically limited to bulk load shedding schemes (e.g. rolling blackouts). More specifically, bulk load shedding and/or reducing voltage (brownouts) are the current manner for dealing with overloaded circuits or transformers. In either case, there is significant impact for customers in the affected area. In addition, there are limited demand response programs for large industrial and commercial customers who are willing to reduce their load on short notice to relieve overload conditions.

Demand response solutions for contingencies, especially in residential areas, are difficult to manage because the network structure changes dynamically. This makes it difficult to identify customers who can respond to a particular contingency. While the utilities have provided some customers with direct control devices for certain loads, such as heating or cooling devices, pool pumps, and so on, the utilities are unable to efficiently and effectively manage these devices over the utility network to respond to specific network needs. Furthermore, utilities typically use simple heuristic based triggers, such as temperature or reserve margin, to determine when to invoke a demand response or curtailment event. However, this approach does not provide the utilities with the best opportunity to exercise the option of economic load shedding or curtailment so that their gains, savings, and/or other criteria are optimized.

For these and other reasons, there is a need for an improved energy demand response management.

BRIEF DESCRIPTION

In accordance with an embodiment of the present invention, a method of demand response management is provided. The method includes determining a number of available demand response events, determining a number of opportunities available to issue the available demand response events and providing a priority for each demand response event. The method further includes selecting a highest priority demand response event among the available demand response events whose threshold value is lower than an observed value of a selected demand response trigger and transmitting control signals to customer sites over a communication network to utilize the selected demand response event for a current opportunity.

In accordance with another embodiment of the present invention a system for controlling demand response events in a utility network is provided. The system includes local controllers for controlling demand response resources, a remote location controller communicatively coupled to the local controllers and to a utility. The remote location controller includes a demand response module configured to determine a number of available demand response events, determine a number of opportunities available to issue the available demand response events and provide a priority for each demand response event. The demand response module is further configured to determine a threshold value for each demand response event and determine a highest priority demand response event among the available demand response events whose threshold value is lower than an observed value of a selected demand response trigger.

In accordance with yet another embodiment of the present invention, a non-transitory computer-readable medium comprising computer-readable instructions of a computer program that, when executed by at least one processor, causes the processor to perform a method for controlling demand response events in a utility network of customer sites is provided. The method includes determining a number of available demand response events, determining a number of opportunities available to issue the available demand response events and providing a priority for each demand response event. The method further includes selecting a highest priority demand response event among the available demand response events whose threshold value is lower than an observed value of a selected demand response trigger and outputting control signals to customer sites over a communication network to utilize the selected demand response event for a current opportunity.

DRAWINGS

These and other features, aspects, and advantages of the present invention will become better understood when the following detailed description is read with reference to the accompanying drawings in which like characters represent like parts throughout the drawings, wherein:

FIG. 1 is a schematic representation of a power distribution system of a utility in accordance with an embodiment of the present system;

FIG. 2 is a schematic representation of a remote location controller of FIG. 1 in accordance with an embodiment of the invention;

FIG. 3 is a flow chart representing steps involved in a method of allocation of demand response events in accordance with an embodiment of the present invention; and

FIG. 4 is a flow chart representing steps involved in a method of determining a number of available demand response events in accordance with an embodiment of the present invention.

DETAILED DESCRIPTION

The embodiments described herein are directed to an energy management system and method that enable utilities to optimize the use of demand response events during certain periods of time. While embodiments of the invention will be described in the context of demand response, it will be appreciated by those skilled in the art that the method and system can be used for other aspects of energy management including deciding when to charge/discharge a battery storage system to support renewable (e.g., wind or solar) power generators as well.

As used herein, the terms "module" or "controller" refers to software, hardware, or firmware, or any combination of these, or any system, process, or functionality that performs or facilitates the processes described herein.

Demand response or load curtailment is generally used to refer to mechanisms used to encourage consumers to reduce demand or curtail loads, thereby reducing the peak demand for electricity. Since electrical generation and transmission systems are generally sized to correspond to peak demand (plus margin for forecasting error and unforeseen events), lowering peak demand reduces overall plant and capital cost requirements. Demand response programs such as critical peak pricing (CPP), Variable Peak Pricing (VPP), and other various incentive programs are examples of programs wherein a utility specifies contractual obligations on when, how often, and the duration of a demand response event for a participating customer. For example, a contract may specify that the utility can invoke up to 15 events per year, where each event will occur between the hours of 12 pm and 6 pm with a maximum of 60 total hours per year. In one embodiment, the utility can choose to use 10 events of 6 hours each, or 15 events of 4 hours each to balance the load, or any other such combination of events and hours to stay within the 15 events, 60 hours limitations for each customer.

If a customer subscribes to a demand response (DR) program, the utility typically has a limited number of opportunities to invoke an event in a given time period, e.g., 15 events per year. These events are desired to be invoked when it is most profitable to do so. According to embodiments of the energy management system, the utilities (or other load servicing entities or demand aggregators) optimally manage an available number of demand response (DR) events which are allocated to customers in order to shed/shift peak electricity demand to maximize the savings from DR programs.

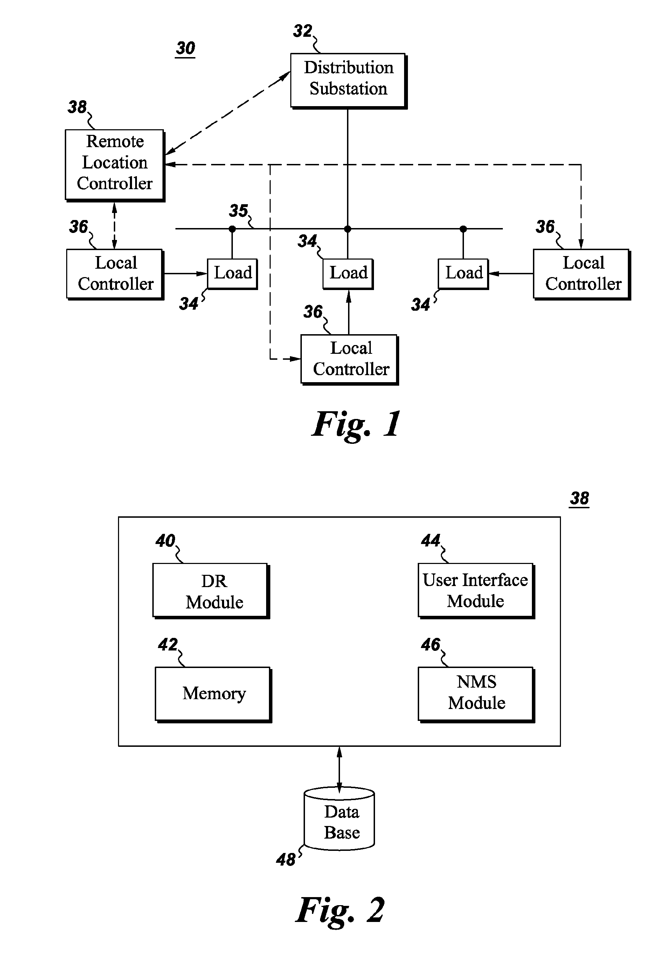

FIG. 1 depicts a power distribution system 30 of a utility in accordance with an embodiment of the present system. It should be noted that even though a power distribution system is shown here, embodiments are equally applicable to other systems such as a power transmission system. Power distribution system 30 includes a distribution substation 32, a plurality of demand response (DR) resources or loads 34 with respective local controllers 36 and a remote location controller 38. Distribution substation 32 supplies electricity to DR resources 34 which may include residential, industrial or commercial loads through a feeder 35. Local controller 36 may include a relay or similar other circuit which disconnects or reconnects DR resource 34 from feeder 35 based on a communication with central controller 38. In order to facilitate the description of the embodiments of the present system, a single feeder 35, a single remote location controller 38, and a distribution substation 32 are shown in FIG. 1. However, it should be understood that embodiments are not limited to these numbers, and that there can be any number of feeders, remote location controllers, and distribution substation in a utility network. In addition, remote location controller 38 can be arranged at and/or hosted by a utility or by any other party.

Remote location controller 38 communicates with local controllers 36 to control demand response resources 34. As discussed earlier, the customers who own demand response resources 34 have subscribed to one or other demand resource programs with the utility or similar party such as an energy retailer. In one embodiment, the customers may be divided into various groups based on a type of demand response program that they have subscribed. Thus, the communication from remote location controller 38 to local controller 36 is determined based on the overall load demand on feeder 35 or in general on a power grid and the DR program that the customer has subscribed. Remote location controller 38 may also be a part of another controller such as supervisory control and data acquisition (SCADA) system (not shown) which is utilized for operation and maintenance of distribution system 30. In one embodiment, local controllers 36 may be smart meters which facilitate communication between loads 34 and remote location controller 38. The communication modes between remote location controller 38 and local controllers 36 can include fiber optics, power line carrier systems, and various wireless technologies. In another embodiment, local controller 36 may be held by the customer at a third location and then according to control signals from remote location controller 38, the customer may direct load 34 by means of one or other communication technique.

In one embodiment, remote location controller 38 and local controller 36 may include a processor (not shown), such as but not limited to at least one microprocessor, a microcontroller, a graphics processor, a digital signal processor (DSP), or any other type of processor or processing circuit. The processor may further include a memory such as random access memory (RAM), flash memory, one or more hard drives, and/or one or more drives that handle removable media and a display.

FIG. 2 shows a block diagram of one example of remote location controller 38 of FIG. 1. Remote location controller 38 includes a demand response (DR) module 40, memory 42, user interface module 44, network management module (NMS) 46, and database (DB) 48. The network management module 46 provides communication management and provisioning for the DR module 40, the customer site (DR resource 36) and the utility. The database 48 stores data such as historical data for a number of customer sites in the network. The historical data can include information on customer utility usage including load type, time of use (TOU), duration of use, shed or demand response events, for example. The customer usage information stored in the database 48 can be updated periodically (e.g., hourly, daily) with load data including hourly load and hourly price data over a twenty four hour period, environmental data including weather information (temperature, humidity, wind speed, heating and cooling degrees) and date and time information such as day of the week, season, etc. In addition, the database 48 stores event data for each customer site. More specifically, the database 48 stores historical information on whether a customer site participated in a demand response event, the start time and end time, day of week, season, etc. The user interface module 44 provides information to an operator and can include a keyboard or touch screen, for example.

The DR module 40 stores all the DR programs and utilizes information from the customer site and the utility to determine whether to call a demand response event to reduce load on the network for a given time period. According to one embodiment, DR module 40 calculates at least one threshold or decision criteria based on a number of factors such as a total number of available demand response events, number of available opportunities (i.e., future time periods of peak load situations to utilize the demand response events) and costs and benefits of utilizing demand response events. The threshold may be, for example, a temperature value or a market price value of electricity. In another embodiment, a plurality of thresholds are determined for a plurality of demand response events. In other words, the customers may subscribe to various demand response programs so the thresholds are determined for each group of demand response events relating to each demand response program. Examples of demand response program include a fixed-period critical peak pricing (CPP-F) program, variable peak pricing (VPP) program, variable-period critical peak pricing (CPP-V) program, multiple-group critical peak pricing (CPP-G) program and multiple demand response (MDR) program.

In the CPP-F program, a utility offers a discounted rate throughout the year in exchange for opportunities to call a critical peak load or CPP event and charge a higher price for energy usage. On normal days, customers pay a rate that is lower than standard flat rate tariff. On CPP event days, utilities typically notify customers one day in advance, and charge a higher rate (3-10 times of the normal rate) during the event window. It is beneficial for most customers since they can maximize their saving by reducing or shifting energy usage during the events. At the same time, utilities are able to achieve their goal of peak reduction. A feature of a CPP program is that utilities are typically only allowed to call a limited number of events per year/season according to the contract terms. For example, the CPP program offered by Southern California Edison (SCE) limits the event number to be no more than 15 events per summer season. Under this program, participants are notified by 3 PM the day before a CPP event is to be called. On CPP event days, higher "critical peak" energy charges are assessed for all electric usage that occurs weekdays between 2 PM and 6 PM.

In the VPP program, a utility may charge a number of different prices on an event day, depending of severity of peak load and generation costs. For example in any one season, a utility may call 5 critical peak events, 5 high peak events, and 10 low peak events and the prices for these events will vary accordingly. In the CPP-V, an event may be called for a period ranging from 2 hours to 6 hours, up to 15 times per year. In addition, the total event time may not exceed, say, 60 hours per season and the price for these 60 hours is predefined. Additionally, in CPP-G Residential customers can be divided into multiple groups of equal sizes, and each event may be invoked only for a subset of the groups. The total number of events for all groups is fixed. When triggered, each group has the same duration in an event; however there is a bigger event window within which the groups can be dispatched. Invoking more groups during one event will usually result in diminishing benefits from latter selected groups since the earlier selected groups would have already reduced the peak load. Furthermore, in MDR program, different programs exist for different types of customers (e.g., residential, commercial, and industrial). The objective in such a case is to determine how many of each customer types should be dispatched.

In one embodiment, DR module 40 determines a threshold value for each DR event type relating to these DR programs. For example, for a VPP, the DR module may determine three thresholds if there are three variable peak prices. The utility utilizes these thresholds to determine when to call a demand response event so as to optimize the overall cost benefit. The demand response event is either directly controlled by the utility through switching, automatically controlled by the utility via commands sent to the customer sites, or implemented by customers at the customer sites via local controllers 36. More particularly, demand response can be implemented by direct or indirect load control such that utilities can either remotely switch off the devices agreed upon by contract (e.g., HVAC units), or send a load control signal to the local controllers 36.

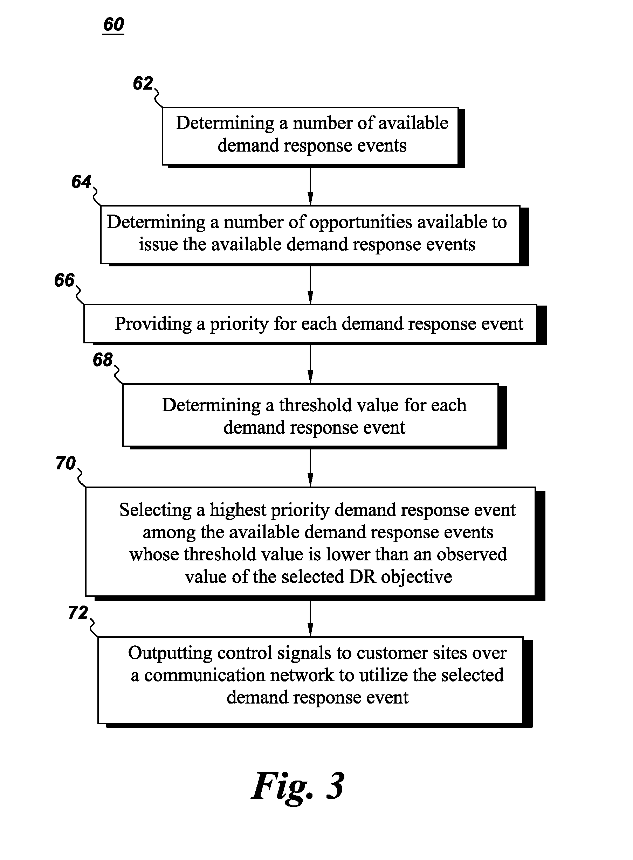

FIG. 3 is a flow diagram 60 showing a method of allocation of demand response events in accordance with an embodiment of the present technique. In one embodiment, the method may be implemented by DR module 40. It should be noted that steps in flow diagram 60 may be repeated for every demand response opportunity that the utility encounters. In 62, a number of available demand response events are determined based on a plurality of demand response programs that the customers have subscribed. In one embodiment, when the DR event duration is fixed, the number of available DR events may be known a priori and can be read from a database. However, in a further embodiment, when DR programs such as CPP-V or CPP-G are utilized, the duration of a DR event may vary and hence the number of available demand response events may not be known a priori. In such a case, the number of available demand response events may be derived based on historical data, details of which will be provided herein.

In 64, a number of opportunities available to issue the available demand response events are determined based on a probability distribution of a selected DR trigger. The selected DR trigger may be a temperature or a market price. The probability distribution of the selected DR trigger may be determined based on historical data or any forecasting method of the selected DR trigger or any combinations thereof. It should be noted that, the occurrences of opportunities are not constant. For example, there may be two opportunities in one day or there may be two opportunities in one week. In 66, a priority for each of the demand response events is provided. In one embodiment, the priority is based on a price level for each of the DR event e.g., higher the price level, higher the priority.

In 68, a threshold value for each of the demand response events is determined based on the number of available demand response events, the number of opportunities available to issue the available demand response events, and the probability distribution of a selected demand response trigger. In 70, a highest priority demand response event among the available demand response events with its threshold value lower than an observed value of the selected DR trigger for the current opportunity is selected. Finally, in 72, control signals are transmitted to customer sites such as over a communication network to utilize the selected demand response event. Control signals may include a load signal to control the loads directly or when the loads are not controlled directly any other signal which indicates the customers to make use of the demand response event. It should be noted that a sequence of processing the method may be interchanged or even some steps may be processed in parallel.

In one embodiment, threshold values for each demand response event or each priority of events may be defined by an optimal policy function $\delta^*_{m,n}$ given by:

$$\delta^*_{m,n} = \begin{cases} v_{m,n-1} - v_{m-1,n-1} & \text{if } m < n \\ 0 & \text{Otherwise} \end{cases} \qquad (1)$$

$$v_{m,n} = \max \sum_{n=1}^{N} \mathsf{E}\left[ c_n . x_n \right] \qquad (2)$$

where, m and n belongs to set M = {1, ..., M} and N = {1, ..., N} respectively. In general, it is assumed here that at a current decision point, the utility has M total events to exercise over a horizon of N days and $v_{m,n}$ represents aggregate saving to the utility with the provided M and N values. In this equation, $c_n$ is a value of saving determined by the selected DR trigger (temperature or market price). If the DR trigger is a market price, $c_n$ is based on a peak price distribution for high temperature days or low temperature days when there are n days remaining in the decision horizon. The decision on whether to take the saving value $c_n$ from the high temperature days distribution or the low temperature days distribution is based on a temperature threshold. In one embodiment, the temperature threshold value may be 80 degrees Fahrenheit indicating the mean differences in prices are statistically significant among days below 80 degree Fahrenheit versus those exceeding 80 degrees. Thus, if the temperature of current day is higher than 80 degrees then the saving value $c_n$ may be selected from the higher temperature days distribution otherwise the saving value $c_n$ from the lower temperature days distribution is selected.

In one embodiment, based on the recursion, mathematical properties of the threshold value for each demand response event can be derived. For a triangular distribution of $c_n$ the optimal threshold value of $\delta^*_{m,n}$ can be calculated analytically. For normal distribution of $c_n$, Monte Carlo simulation can be used to estimate $v_{m,n}$ and $\delta^*_{m,n}$. The dynamic programming recursion is then solved by backward induction.

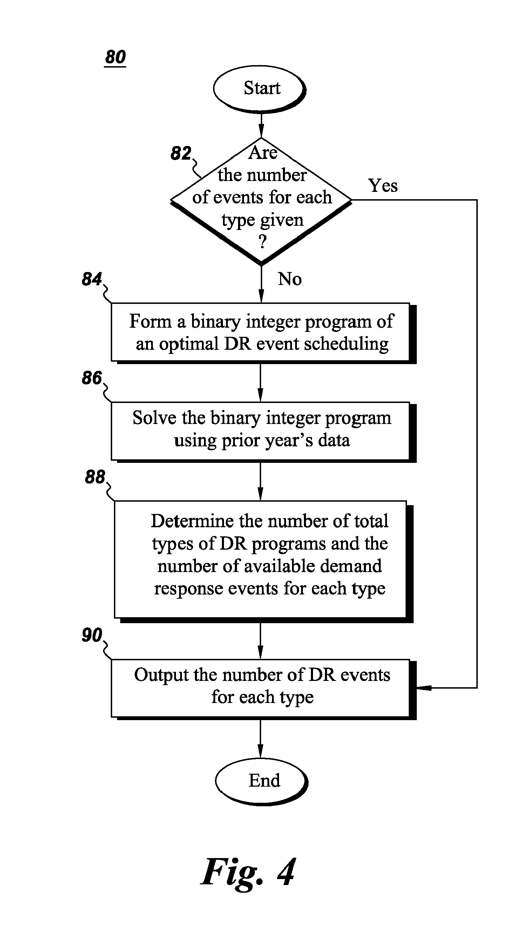

FIG. 4 is a flow diagram 80 representing one method of determining a number of available demand response events in accordance with an embodiment of the present techniques. As described herein, the number of available demand response events may be known a priori for some cases whereas in other cases such as the VPP program they need to be derived. At 82 it is first determined whether the number of available demand response events for each type of DR program that is being considered is known a priori or not. If the number is known a priori, then in 90, the number of demand response events for each type is output. If the number of available demand response events for each type of DR program is not known, the method moves to 84 to determine a new number. At 84, a binary integer program of an optimal DR event scheduling is formed and at 86, the binary integer program is solved using historical such as prior years' data. Finally, at 88, the number of total types of DR programs and the number of available demand response events for each type are determined and outputted at 90 by averaging the optimal numbers of the prior years with some rounding off and/or adjustment to satisfy the constraints of the binary integer program.

In one embodiment, when the DR program type is CPP-V, a mathematical model for the binary integer program of an optimal DR event scheduling may be given as

$$\max \sum_{n \in \mathbb{N}} \sum_{k \in \mathbb{K}} c_{k,n} x_{k,n} \qquad (3)$$

subj ect to constraints

$$\sum_{n \in \mathbb{N}} \sum_{k \in \mathbb{K}} x_{k,n} \leq t$$

$$\sum_{n \in \mathbb{N}} \sum_{k \in \mathbb{K}} d_k x_{k,n} \leq h$$

$$\sum_{k \in \mathbb{K}} x_{k,n} \leq 1, \forall n \in \mathbb{N}$$

$$x_{k,n} \in \{0, 1\}, \forall k \in \mathbb{K}, n \in \mathbb{N}$$

where k belongs to set K = {1, ..., K} and n belongs to set N ={1, ..., N} representing a set of number of priorities and a set of number of days respectively. where, $d_k$ is a duration or number of groups for priority k event, $c_{k\,n}$ is a maximum cumulative saving if any priority k event is triggered at day n, t is a total number of events available and h is a total number of hours available. Furthermore, $x_{k,n}$ is a binary decision variable which is 1 when priority k event is assigned to day n otherwise it is zero. In one embodiment, higher the value of k, higher is the priority. The constraints here indicate that at no time, the summation of all available events should exceed the total number of events t and the summation of available events times their duration should exceed the total number of available hours. In other embodiments, some of the constraints may be omitted and/or some new constraints may be added.

In another embodiment, when the DR program type is CPP-G, a mathematical model for the binary integer program of an optimal DR event scheduling may be given as

$$\max \sum_{n \in \mathbb{N}} \sum_{k \in \mathbb{K}} \sum_{l=1}^{k} \alpha^{l-1} c_n x_{k,n} \qquad (4)$$

subj ect to constraints

$$\sum_{n\in\mathbb{N}}\sum_{k\in\mathbb{K}}x_{k,n}\leq t$$

$$\sum_{n\in\mathbb{N}}\sum_{k\in\mathbb{K}}d_k x_{k,n}\leq t\bullet K$$

$$\sum_{k\in\mathbb{K}}x_{k,n}\leq 1,\ \forall n\in\mathbb{N}$$

$$x_{k,n}\in\{0,1\},\ \forall k\in\mathbb{K},n\in\mathbb{N}$$

where $\alpha$ is a discount factor of savings for $l$ groups from $l$-1 groups. As in the earlier case, the constraints here indicate that at no time, the summation of all available events should exceed the total number of events t and furthermore that the summation of available events times the respective number of groups should not exceed the product of the total number of events t with total number of groups.

One exemplary solution of equation (3) is given below in Table 1 where the number of available demand response events for year 2009 is determined from historical data of years 2004 to 2008.

Table 1

| Year | 6 Hr. Event | 5 Hr. Event | 4 Hr. Event | 3 Hr. Event | 2 Hr. Event |
|------|------|------|------|------|------|
| 2004 | 5 | 2 | 1 | 2 | 5 |
| 2005 | 5 | 1 | 3 | 1 | 5 |
| 2006 | 5 | 3 | 0 | 1 | 6 |
| 2007 | 5 | 1 | 3 | 1 | 5 |
| 2008 | 5 | 2 | 1 | 2 | 5 |
| 2009 | 5 | 2 | 1 | 2 | 5 |

Thus, the number of available demand response events for each type may be determined and along with their thresholds, the number of available demand response events may be utilized to manage the demand response optimally.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:

1. A method for demand response management comprising:

determining a number of available demand response events;
determining a number of opportunities available to issue the available demand response events;
providing a priority for each demand response event;
determining a threshold value for each demand response event;
selecting a highest priority demand response event among the available demand response events whose threshold value is lower than an observed value of a selected demand response trigger; and
transmitting control signals to customer sites over a communication network to utilize the selected demand response event for a current opportunity.

2. The method of clause 1, wherein the available demand response events comprise a plurality of demand response programs customers have subscribed.

3. The method of clause 1 or clause 2, wherein the plurality of demand response programs comprise at least one of fixed-period critical peak pricing (CPP-F) program, variable peak pricing (VPP) program, variable-period CPP (CPP-V) program, multiple-group CPP (CPP-G) program and multiple demand response (MDR) program.

4. The method of any preceding clause, wherein determining the number of available demand response events comprises obtaining a known number from a database or deriving a new number based on historical data.

5. The method of any preceding clause, wherein deriving the new number comprises:

forming a binary integer program of an optimal demand response event scheduling;
solving the binary integer program using prior year's data;
determining total types of demand response programs and available demand response events for each type; and
outputting the new number of demand response events for each type.

6. The method of any preceding clause, wherein the binary integer program of the optimal demand response event scheduling comprises an optimization model of maximizing cumulative saving with a plurality of constraints.

7. The method of any preceding clause, wherein the plurality of constraints comprise at least one of:

summation of all available events being less than or equal to the total number of events;
a summation of available events times their duration being less than or equal to the total number of available hours; and
a summation of available events times the respective number of groups being less than or equal to a product of the total number of events with the total number of groups.

8. The method of any preceding clause, wherein the number of opportunities available to issue the available demand response events is based on a probability distribution of a selected demand response trigger.

9. The method of any preceding clause, wherein the selected demand response trigger comprises temperature value, market price value of electricity, or combinations thereof.

10. The method of any preceding clause, wherein the probability distribution of the selected demand response trigger is determined based on historical data or a forecasting method of the selected demand response trigger or any combinations thereof.

11. The method of any preceding clause, wherein the priority for each demand response event is based on price level.

12. The method of any preceding clause, wherein the threshold value for each demand response event is based on the number of available demand response events, the number of opportunities available to issue the available demand response events, and a probability distribution of the selected demand response trigger.

13. A system for controlling demand response events in a utility network, comprising:

local controllers for controlling demand response resources;
a remote location controller communicatively coupled to the local controllers and to a utility, wherein the remote location controller comprises:
a demand response module configured to:

determine a number of available demand response events;

determine a number of opportunities available to issue the available demand response events;
provide a priority for each demand response event;
determine a threshold value for each demand response event; and
determine a highest priority demand response event among the available demand response events whose threshold value is lower than an observed value of a selected demand response trigger.

14. The system of any preceding clause, wherein the available demand response events comprises demand response events corresponding to a plurality of demand response programs customers have subscribed.

15. The system of any preceding clause, wherein the plurality of demand response programs comprise at least one of fixed-period critical peak pricing (CPP-F) program, variable peak pricing (VPP) program, variable-period CPP (CPP-V) program, multiple-group- CPP (CPP-G) program and multiple demand response (MDR) program.

16. The system of any preceding clause, wherein determining the number of available demand response events comprises deriving a new number based on historical data.

17. The system of any preceding clause, wherein deriving the new number comprises:

forming a binary integer program of an optimal demand response event scheduling;
solving the binary integer program using prior year's data;
determining total types of demand response programs and available demand response events for each type; and
outputting the new number of demand response events for each type.

18. The system of any preceding clause, wherein the number of opportunities available to issue the available demand response events is based on a probability distribution of a selected demand response trigger.

19. The system of any preceding clause, wherein the selected demand response trigger comprises temperature value, market price value of electricity, or combinations thereof.

20. A non-transitory computer-readable medium comprising computer-readable instructions of a computer program that, when executed by at least one processor, causes the processor to perform a method for controlling demand response events in a utility network of customer sites, the method comprising:

determining a number of available demand response events;
determining a number of opportunities available to issue the available demand response events;
providing a priority for each demand response event;
determining a threshold value for each demand response event;
selecting a highest priority demand response event among the available demand response events whose threshold value is lower than an observed value of a selected demand response trigger; and
outputting control signals to customer sites over a communication network to utilize the selected demand response event for a current opportunity.

**Claims**

1. A method for demand response management comprising:

determining (62) a number of available demand response events;
determining (64) a number of opportunities available to issue the available demand response events;
providing (66) a priority for each demand response event;
determining (68) a threshold value for each demand response event;
selecting (70) a highest priority demand response event among the available demand response events whose threshold value is lower than an observed value of a selected demand response trigger; and
transmitting (72) control signals to customer sites over a communication network to utilize the selected demand response event for a current opportunity.

2. The method of claim 1, wherein the available demand response events comprise a plurality of demand response programs customers have subscribed.

3. The method of claim 2, wherein the plurality of demand response programs comprise at least one of fixed-period critical peak pricing (CPP-F) program, variable peak pricing (VPP) program, variable-period CPP (CPP-V) program, multiple-group CPP (CPP-G) program and multiple demand response (MDR) program.

4. The method of any one of claims 1 to 3, wherein determining the number of available demand response events comprises obtaining a known number from a database or deriving a new number based on historical data.

5. The method of claim 4, wherein deriving the new number comprises:

> forming (84) a binary integer program of an optimal demand response event scheduling;
> solving (86) the binary integer program using prior year's data;
> determining (88) total types of demand response programs and available demand response events for each type; and
> outputting (90) the new number of demand response events for each type.

6. The method of claim 5, wherein the binary integer program of the optimal demand response event scheduling comprises an optimization model of maximizing cumulative saving with a plurality of constraints.

7. The method of claim 6, wherein the plurality of constraints comprise at least one of:

> summation of all available events being less than or equal to the total number of events;
> a summation of available events times their duration being less than or equal to the total number of available hours; and
> a summation of available events times the respective number of groups being less than or equal to a product of the total number of events with the total number of groups.

8. The method of any one of claims 1 to 7, wherein the number of opportunities available to issue the available demand response events is based on a probability distribution of a selected demand response trigger.

9. The method of claim 8, wherein the selected demand response trigger comprises temperature value, market price value of electricity, or combinations thereof.

10. The method of claim 8 or claim 9, wherein the probability distribution of the selected demand response trigger is determined based on historical data or a forecasting method of the selected demand response trigger or any combinations thereof.

11. The method of any one of claims 1 to 10, wherein the priority for each demand response event is based on price level.

12. The method of anyone of claims 1 to 11, wherein the threshold value for each demand response event is based on the number of available demand response events, the number of opportunities available to issue the available demand response events, and a probability distribution of the selected demand response trigger.

13. A system for controlling demand response events in a utility network, comprising:

> local controllers (36) for controlling demand response resources;
> a remote location controller (38) communicatively coupled to the local controllers and to a utility (32), wherein the remote location controller comprises:
>
>> a demand response module (40) configured to:
>>
>>> determine (62) a number of available demand response events;
>>> determine (64) a number of opportunities available to issue the available demand response events;
>>
>> provide (66) a priority for each demand response event;
>> determine (68) a threshold value for each demand response event; and
>> determine (70) a highest priority demand response event among the available demand response events whose threshold value is lower than an observed value of a selected demand response trigger.

14. The system of claim 13, wherein the available demand response events comprises demand response events corresponding to a plurality of demand response programs customers have subscribed.

15. The system of claim 14, wherein the plurality of demand response programs comprise at least one of fixed-period critical peak pricing (CPP-F) program, variable peak pricing (VPP) program, variable-period CPP (CPP-V) program, multiple-group-CPP (CPP-G) program and multiple demand response (MDR) program.

*Fig. 1*

*Fig. 2*

<u>**60**</u>

**62**

Determining a number of available demand response events

**64**

Determining a number of opportunities available to issue the available demand response events

**66**

Providing a priority for each demand response event

**68**

Determining a threshold value for each demand response event

**70**

Selecting a highest priority demand response event among the available demand response events whose threshold value is lower than an observed value of the selected DR objective

**72**

Outputting control signals to customer sites over a communication network to utilize the selected demand response event

*Fig. 3*

_80_

```
          ( Start )
              │
              ▼
82          ╱Are╲
         ╱the number╲           Yes
        ╱of events for each╲──────────┐
         ╲  type given  ╱             │
          ╲    ?    ╱                 │
              │                       │
              │ No                    │
              ▼                       │
84 ┌────────────────────────┐        │
   │ Form a binary integer  │        │
   │ program of an optimal  │        │
   │ DR event scheduling    │        │
   └────────────────────────┘        │
              │                       │
              ▼                       │
86 ┌────────────────────────┐        │
   │ Solve the binary       │        │
   │ integer program        │        │
   │ using prior year's data│        │
   └────────────────────────┘        │
              │                       │
              ▼                       │
88 ┌────────────────────────┐        │
   │ Determine the number   │        │
   │ of total types of DR   │        │
   │ programs and the       │        │
   │ number of available    │        │
   │ demand response events │        │
   │ for each type          │        │
   └────────────────────────┘        │
              │                       │
              ▼                       │
90 ┌────────────────────────┐        │
   │ Output the number of   │◄───────┘
   │ DR events for each type │
   └────────────────────────┘
              │
              ▼
          ( End )
```

*Fig. 4*